# EUROPÄISCHE PATENTSCHRIFT

(11) **EP 1 042 383 B1**
(45) Veröffentlichungstag und Bekanntmachung des Hinweises auf die Patenterteilung: **15.09.2004**
(21) Anmeldenummer: 99971007.2
(22) Anmeldetag: 24.09.1999
(51) Int. Cl.: C08G 18/08, C08G 18/12, C09D 175/04, C09D 17/00

(54) **WASSERVERDÜNNBARE BINDEMITTELZUSAMMENSETZUNG**
WATER-DILUTABLE BINDING AGENT COMPOSITION
COMPOSITION DE LIANT DILUABLE A L'EAU

(30) Priorität: 26.10.1998 DE 19849207
(43) Veröffentlichungstag der Anmeldung: 11.10.2000
(73) Patentinhaber: E.I. DU PONT DE NEMOURS & CO. (INC.), Wilmington Delaware 19898 (US)
(72) Erfinder: GÖBEL, Armin, D-58300 Wetter (DE); SCHÄFFER, Hermann, D-42275 Wuppertal (DE); VOGT-BIRNBRICH, Bettina, D-42719 Solingen (DE)
(74) Vertreter: Gille Hrabal Struck Neidlein Prop Roos
(86) Internationale Anmeldenummer: PCT/EP1999/007108
(87) Internationale Veröffentlichungsnummer: WO 2000/024797

(56) Entgegenhaltungen:
- EP-A- 0 438 090
- DE-A- 19 705 219
- US-A- 5 047 294

## Beschreibung

Die Erfindung betrifft wasserverdünnbare Bindemittelzusammensetzungen, die vorteilhaft als Pastenharz zum Anreiben von Pigmenten eingesetzt werden können. Die entstehenden Pigmentpasten sind geeignet zur Einarbeitung in wäßrige Beschichtungsmittel, insbesondere zur Einarbeitung in Wasserbasislacke und Wasserdecklacke. Die wasserverdünnbaren Bindemittelzusammensetzungen können Anwendung finden in der Fahrzeug- und Industrielackierung zum Beschichten von Kunststoff- und Metallsubstraten.

Bei der Herstellung von stabilen pigmentierten Wasserlacken ist es notwendig, die Pigmente gut zu benetzen, in geeigneten Dispergieraggregaten fein zu vermahlen und stabil zu verteilen, um ein Agglomerieren oder Sedimentieren der Pigmente zu verhindern. Bei Einsatz von lösemittelarmen wasserverdünnbaren Dispersionen oder Emulsionen können dabei die Scherkräfte aufgrund der sehr niedrigen Viskositäten nicht ausreichend wirken. Außerdem ist dabei zu berücksichtigen, daß wasserverdünnbare hochmolekulare Dispersionen oder Emulsionen in Dispergieraggregaten nicht immer scherstabil sind. In diesen Fällen ist es daher notwendig, einen Teil des einzusetzenden Bindemittels durch ein Pastenharz zu ersetzen, in dem die Pigmente angerieben werden. Die so erhaltenen Pigment- oder Mahlpasten werden anschließend mit dem Hauptbindemittel vermischt ("aufgelackt" oder komplettiert).

Die genannten Pastenharze müssen dabei eine Reihe von Anforderungen erfüllen. Beispielsweise sollen die Pastenbindemittel mit dem oder den Hauptbindemitteln gut verträglich sein und in der erforderlichen Zusatzmenge die Eigenschaften des Lackes nicht nachteilig verändern. Sie sollen ein gutes Benetzungsvermögen für die jeweiligen Pigmente aufweisen, über einen längeren Zeitraum lagerstabil sein und keine Farbänderungen im Lack bewirken. Insbesondere für die Herstellung von Reparaturlacken aus standardisierten Mischlacken ist es von großer Bedeutung, bezüglich coloristischer und technologischer Eigenschaften sehr gut reproduzierbare Lackkonzentrate einzusetzen, um gewünschte Farbtöne rationell und ohne unzumutbaren Tönaufwand herzustellen.

Es sind bereits verschiedene als Pastenharz geeignete Bindemittel beschrieben worden, die in Wasserbasis- bzw. Wasserdecklacken unterschiedlicher Bindemittelzusammensetzungen Anwendung finden können. So werden in der EP-A-0 260 447 Polyesterharze, Acrylatharze und/oder Amin-Formaldehyd-Kondensationsharze als Anreibeharze zur Herstellung von Wasserbasislacken eingesetzt. Als Hauptbindemittel enthalten die Wasserbasislacke acrylierte Polyester und Polyurethanharze. Die hier beschriebenen Anreibeharze sind mit den Hauptbindemitteln nicht immer voll verträglich, was unter anderem bei der Formulierung von Metallic-Lacken zur Beeinträchtigung des Metallic-Effektes führen kann.

In der EP-A-0 299 148 werden Pigmentpasten auf Basis von wasserverdünnbaren Polyurethanpastenharzen beschrieben. wobei die Polyurethanharze hergestellt werden aus Polyesterpolyolen, deren Säurekomponente mindestens 50 Gew.-% langkettige Carbonsäuren mit 18 bis 60 C-Atomen im Molekül enthält.

Die EP-A-438 090 beschreibt Anreibeharze auf Basis wasserverdünnbarer Polyesterurethane, die erhalten werden durch Umsetzung von carboxylgruppenfreien Polyesterpolyolen und niedermolekularen Diolen, wobei zumindest ein Teil der niedermolekularen Diole eine zur Anionenbildung befähigte Säuregruppe enthält, mit Diisocyanaten.

Nachteil der genannten Anreibeharze ist. daß aus ihnen formulierte Pigmentpasten, insbesondere Weißpasten, Lacke mit einer mangelnden Deckfähigkeit ergeben. Auch gibt es mit den bekannten Pastenformulierungen große Probleme, ein Tiefschwarz zu erstellen. Oftmals sind die formulierten Pigmentpasten stark thixotrop, so daß Dosierbarkeit und Pumpbarkeit der Pasten sehr beeinträchtigt sind. Desweiteren sind sowohl die bekannten Pastenharze als auch die damit formulierten Pigmentpasten nicht froststabil und die Chemikalienbeständigkeit der mit diesen Pastenharzen erstellten Wasserlacke bzw. daraus erhaltenen Beschichtungen ist verbesserungsbedürftig. Mitunter werden bei der Herstellung von Pastenharzdisnersionen unzureichende Festkörpergehalte erzielt, was unter anderem die Verarbeitbarkeit beeinträchtigen und unwirtschaftlicher machen kann.

Desweiteren sind aus der EP-A-0 469 389 wäßrige Zwei-Komponenten-Polyurethanbeschichtungsmittel bekannt, welche wasserverdünnbare hydroxyfunktionelle Polyurethanharze mit einem Gesamt-Gehalt an Urethan- und Harnstoffgruppen von 9 bis 20 Gew.-%, bezogen auf das Gewicht des Polyurethans, und wasserdispergierbare Polyisocyanate enthalten. Die Beschichtungsmittel können zusätzlich als 3. Komponente bis zu 20 Gew.-% eines Polyols mit einer Molmasse von 62 bis 1000, bevorzugt von 62 bis 250, das gegebenenfalls Polyethergruppen aufweisen kann, enthalten. Ein Einsatz der genannten Polyurethanharze als Pastenharz wird nicht erwähnt.

Aufgabe der Erfindung war es daher, als Pastenharz geeignete wasserverdünnbare Bindemittelzusammensetzungen bereitzustellen, welche als Pigmentpastenformulierung zur Einarbeitung in wäßrige Beschichtungsmittel eingesetzt werden können. Aus den Bindemittelzusammensetzungen formulierte Pigmentpasten sollen eine sehr gute Verträglichkeit mit einer großen Anzahl verschiedener Bindemittelsysteme sowie ein sehr gutes Pigmentierungs- und Benetzungsvermögen zeigen und infolgedessen eine energie- und zeitsparende Herstellung von pigmentierten Lacken ermöglichen. Die Pigmentpasten sollen gut verarbeitbar und dosierbar, insbesondere auch pumpfähig, sein. Sie sollen Lacke mit einer sehr guten Deckfähigkeit ergeben und die Erstellung eines Tiefschwarzes ermöglichen. Die Pigmentpasten und ebenso die daraus erstellten wäßrigen Lacke sollen weiterhin lager- und froststabil sein. Es sollen Beschichtungen mit hohem Glanz, gutem Metallic-Effekt sowie sehr guter Härte und Chemikalienbeständigkeit erhalten werden.

Die Aufgabe wird gelöst durch eine wasserverdünnbare Bindemittelzusammensetzung, enthaltend
A) ein oder mehrere wasserverdünnbare hydroxyfunktionelle Polyurethanharnstoffharze mit einem Harnstoffgruppengehalt (berechnet als -NHCONH-) von 10 bis 300, bevorzugt von 20 bis 250 mmol in 100 g Festharz, einem Urethangruppengehalt (berechnet als -NHCOO-) von 20 bis 300, bevorzugt von 80 bis 250 mmol in 100 g Festharz, einer OH-Zahl von 20 bis 250, bevorzugt von 40 bis 200, besonders bevorzugt von 60 bis 150, einer Säurezahl von 15 bis 80, bevorzugt von 18 bis 65, besonders bevorzugt von 19 bis 45 und einer zahlenmittleren Molmasse Mn von 1000 bis 20000 g/mol, bevorzugt von 1500 bis 15000 g/mol, welche erhalten werden durch
   I) Herstellung eines NCO-Gruppen enthaltenden Polyurethanprepolymeren durch Umsetzung
      a1) eines oder mehrerer hydroxyfunktioneller Verbindungen mit einer zahlenmittleren Molmasse Mn von 360 bis 8000 g/mol, bevorzugt 500 bis 5000 g/mol, mit
      a2) einem oder mehreren Polyisocyanaten und
      a3) mindestens einer Verbindung mit mindestens einer mit Isocyanat reaktiven Gruppe und mindestens einer ionischen oder zur Ionenbildung befähigten Gruppe,
   II) nachfolgende Umsetzung des NCO-Gruppen enthaltenden Polyurethanprepolymeren mit
      a4) einem oder mehreren hydroxyfunktionellen Monoaminen sowie gegebenenfalls mit einem oder mehreren Polyolen, in solchen Mengenverhältnissen, daß das resultierende Polyurethan gewünschte Hydroxylzahlen sowie Harnstoff- und Urethangruppenanteile aufweist,
   III) zumindest teilweise Neutralisation der ionischen Gruppen des erhaltenen Polyurethans vor oder nach der Umsetzung in Stufe II und Überführung des erhaltenen Umsetzungsproduktes in die wäßrige Phase
   und
B) 2,0 bis 25 Gew.-%, bezogen auf den Festkörpergehalt an eingesetztem Polyurethanharnstoffharz, eines oder mehrerer Polyetherpolyole mit einer Molmasse von 400 bis 5000 g/mol, bevorzugt 500 bis 3000 g/mol.

Die erfindungsgemäße Bindemittelzusammensetzung enthält als Komponente A) ein oder mehrere wasserverdünnbare hydroxyfunktionelle Polyurethanharnstoffharze.

Im folgenden sollen die wasserverdünnbaren hydroxyfunktionellen Polyurethanharnstoffharze sowie ihre Herstellung beschrieben werden.

Zur Herstellung der wasserverdünnbaren Polyurethanharnstoffharze wird zunächst in einem ersten Schritt (I) ein NCO-funktionelles Polyurethanprepolymer hergestellt. Das Polyurethanprepolymer wird erhalten durch Umsetzung der Komponenten a1) bis a3).

Bei der Komponente a1) zur Herstellung des NCO-funktionellen Polyurethanprepolymeren handelt es sich um hydroxyfunktionelle lineare oder verzweigte Verbindungen, die bevorzugt eine OH-Funktionalität von 2 bis 3, besonders bevorzugt von 2, eine OH-Zahl von 50 bis 250 und eine zahlenmittlere Molmasse (Mn) von 360 bis 8000 g/mol, bevorzugt von 500 bis 5000 g/mol aufweisen.

Als Komponente a1) einsetzbar sind Polyesterpolyole, Polycärbonatpolyole. Polyetherpolyole, Polylactonpolyole und/oder Poly(meth)acrylatpolyole bzw. die entsprechenden Diole. Die Polyole und Diole können jeweils einzeln oder in Kombination miteinander eingesetzt werden.

Bevorzugt werden als Komponente a1) Polyesterpolyole, z.B. Polyesterdiole, eingesetzt. Besonders bevorzugt handelt es sich dabei um lineare Polyesterpolyole, insbesondere um iineare Polyesterdiole.

Die Polyesterpolyole können in üblicher dem Fachmann bekannter Weise beispielsweise durch Polykondensation aus organischen Dicarbonsäuren oder ihren Anhydriden und organischen Polyolen hergestellt werden. Die Dicarbonsäuren und die Polyole können aliphatischer, cycloaliphatischer oder aromatischer Natur sein.

Bei der Säurekomponente zur Herstellung der Polyesterpolyole handelt es sich bevorzugt um niedermolekulare Dicarbonsäuren oder deren Anhydride mit 2 bis 17, bevorzugt unter 16, beesonders bevorzugt unter 14 Kohlenstoffatomen im Molekül. Geeignete Dicarbonsäuren sind beispielsweise Phthalsäure, Isophthalsäure, Alkyl-Isophthalsäure, Terephthalsäure. Hexahydrophthalsäure, Adipinsäure, Trimethyladipinsäure, Azelainsäure, Sebacinsäure, Fumarsäure, Maleinsäure, Glutarsäure, Bernsteinsäure, Itaconsäure und 1,4-Cyclohexandicarbonsäure. Anstelle der Säuren können auch die entsprechenden Anhydride, sofern sie existieren, eingesetzt werden. Um Verzweigungen zu erzielen können auch Anteile an höherfunktionellen Carbonsäuren zugesetzt werden, z.B. trifunktionelle Carbonsäuren wie Trimellithsäure, Apfelsäure und Dimethylolpropionsäure.

Zur Herstellung der Polyesterpolyole einsetzbare Polyole sind bevorzugt Diole, beispielsweise Glykole wie Ethylenglykol, Propandiol-1,2, Butandiol-1,2, -1,3 und -1,4, 2-Ethylenpropandiol-1,3, Hexandiot-1,6, Cyclohexandiol-1,2 und -1,4, hydriertes Bisphenol A und Neopentylglykol.

Die Diole können gegebenenfalls durch geringe Mengen an höherwertigen Alkoholen modifiziert sein.

Beispiele für mitverwendbare höherwertige Alkohole sind Trimethylolpropan.

Pentaerythrit, Glycerin und Hexantriol. Anteilmäßig können auch kettenabbrechende einwertige Alkohole, beispielsweise solche mit 1 bis 18 C-Atomen im Molekül, wie Propanol, Butanol, Cyclohexanol, n-Hexanol, Benzylalkohol, Isodekanol, gesättigte und ungesättigte Fettalkohole, eingesetzt werden.

Die Umsetzung der Komponenten erfolgt dabei in solchen Mengenverhältnissen, daß die gewünschten OH-Zahlen der Polyesterpolyole erhalten werden.

Bevorzugt sind die Polyesterpolyole im wesentlichen carboxylgruppenfrei. Sie können beispielsweise Säurezahlen von < 3, bevorzugt < 1, aufweisen. Es ist jedoch auch möglich, daß die Polyesterpolyole Carboxylgruppen enthalten, beispielsweise können sie dann Säurezahlen von 5 bis 50 mg KOH/g aufweisen. Die Carboxylgruppen können beispielsweise über di- oder trifunktionelle Carbonsäuren, wie z.B. Trimellithsäure, Apfelsäure, und Dihydroxymonocarbonsäuren, wie z.B. Dimethylolpropionsäure, eingeführt werden.

Die Polyesterpolyole können einzeln oder in Kombination miteinander eingesetzt werden.

Ebenfalls bevorzugt sind als Komponente a1) Polycarbonatpolyole und insbesondere Polycarbonatdiole.

Bei den Polycarbonatpolyolen handelt es sich um Ester der Kohlensäure, die durch Reaktion von Kohlensäurederivaten, z.B. Diphenylcarbonat oder Phosgen, mit Polyolen, bevorzugt Diolen, erhalten werden. Als geeignete Diole kommen z.B. Ethylenglykol, Propandiol-1,2 und -1,3, Butandiol-1,4 und-1,3, Hexandiol-1,6, Neopentylglykol, 2-Methyl-1,3-propandiol und 1,4-Bishydroxymethylcyclohexan in Frage.

Die Polycarbonatpolyole können einzeln oder in Kombination miteinander eingesetzt werden.

Als Komponente a1) ebenfalls gut geeignet sind Polyetherpolyole und/oder Polylactonpolyole.

Als Polyetherpolyole kommen beispielsweise Polyetherpolyole der folgenden allgemeinen Formel in Frage: 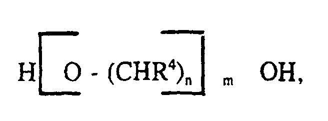 in der R⁴ Wasserstoff oder ein niedriger Alkylrest (z.B. C₁ bis C₆), gegebenenfalls mit verschiedenen Substituenten, n = 2 bis 6 und m = 10 bis 50 bedeuten. Die Reste R⁴ können gleich oder verschieden sein. Beispiele für Polyetherpolyole sind Poly(oxytetramethylen)glykole, Poly(oxyethylen)glykole und Poly(oxypropylen)glykole oder gemischte Blockcopolymere, die unterschiedliche Oxytetramethylen-, Oxyethylen- und/oder Oxypropyleneinheiten enthalten.

Die Polyetherpolyole können einzeln oder in Kombination miteinander eingesetzt werden.

Bei den Polylactonpolyolen handelt es sich um Polyole, bevorzugt Diole, die sich von Lactonen, bevorzugt Caprolactonen ableiten. Man erhält diese Produkte beispielsweise durch Umsetzung eines epsilon-Caprolactons mit einem Diol. Die Polylactonpolyole zeichnen sich durch wiederkehrende Polyesteranteile, die sich von dem Lacton ableiten, aus. Diese wiederkehrenden Molekülanteile können beispielsweise der folgenden allgemeinen Formel entsprechen: 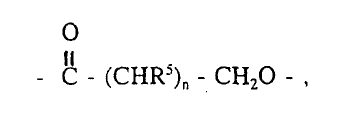 wobei n bevorzugt 4 bis 6 und R⁵ Wasserstoff, ein Alkylrest ein Cycloalkylrest oder ein Alkoxyrest ist und die gesamte Anzahl der Kohlenstoffatome in den Substituenten des Lactonringes 12 nicht übersteigt. Bevorzugt eingesetzte Lactone sind die epsilon-Caprolactone, bei denen n den Wert 4 hat. Besonders bevorzugt ist dabei das unsubstituierte epsilon-Caprolacton. Die Lactone können einzeln oder in Kombination eingesetzt werden.

Für die Umsetzung mit den Lactonen geeignete Diole sind z.B. Ethylenglykol, Propandiol-1,3, Butandiol-1,4 und Dimethylolcyclohexan.

Die Polylactonpolyole können einzeln oder in Kombination miteinander eingesetzt werden.

Als Komponente a1) können desweiteren auch Poly(meth)acrylatpolyole eingesetzt werden. Bei den Poly(meth)acrylatpolyolen handelt es sich um mittels radikalischer Polymerisation hergestellte Polymerisate aus hydroxyfunktionellen (Meth)acrylsäureestern und weiteren radikalisch polymerisierbaren ungesättigten Monomeren. Bevorzugt können Poly(meth)acrylatpolyole verwendet werden, die durch das spezifische Herstellungsverfahren einen selektiven Aufbau mit endständigen OH-Gruppen aufweisen. Die Poly(meth)acrylatpolyole können ebenfalls einzeln oder in Kombination miteinander eingesetzt werden.

Zusätzlich können in der Komponente a1) gebenenfalls auch ein oder mehrere niedrigmolekulare mehrwertige Alkohole, bevorzugt difunktionelle Alkohole, mit einer Molmasse von 62 bis 356 g/mol mitverwendet werden. Beispiele hierfür sind Ethylenglykol, Propandiol-1,2 und -1.3. Butandiol-1,3 und -1,4, Hexandiol-1,6, Octandiol-1,8, Cyclohexandiol-1,2 und -1,4, Dimethylolpropan, Neopentylglykol, Cyclohexandimethanol und hydroxyethyliertes oder hydroxypropyliertes Bisphenol A oder Bisphenol F.

Als Komponente a2) zur Herstellung der NCO-funktionellen Prepolymeren können beliebige organische Polyisocyanate, bevorzugt Diisocyanate, einzeln oder in Kombination eingesetzt werden. Die Polyisocyanate können z.B. aromatischer, aliphatischer und/oder cycloaliphatischer Natur sein. Es kann sich hierbei auch um Ether- oder Estergruppen enthaltende Diisocyanate handeln. Beispiele für geeignete Diisocyanate sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylen-diisocyanat, 2,6-Toluylen-diisocyanat, 1-Isocyanatomethyl-5-isocyanato-1,3,3-trimethylcyclohexan, Bis-(4-isocyanato-phenyl)-methan, Norbonendiisocyanat, 4,4-Diisocyanato-diphenylether, 1,5-Dibutylpentamethylendiisocyanat, 2,3-Bis-(8-isocyanatooctyl)-4-octyl-5-hexylcyclohexan, 3-Isocyanatomethyl-1-methylcyclohexylisocyanat, und/oder 2,6-Diisocyanatomethylcapronat.

Es können auch nicht vergilbende und/oder sterisch gehinderte Isocyanate mit 4 bis 25, vorzugsweise 6 bis 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen als Substituent am Grundgerüst enthalten, eingesetzt werden. Das Grundgerüst kann aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, Bis-(4-isocyanatocyclohexyl)methan, 1,1,6,6-Tetramethyl-hexamethylendiisocyanat, 1,5-Dibutyl-pentamethylendiisocyanat. 3-Isocyanatomethyl-1-methyl-cyclohexyl-isocyanat, p- und m-Tetramethylxylylendiisocyanat und/oder die entsprechenden hydrierten Homologen.

Bei der Komponente a3) zur Herstellung der NCO-funktionellen Prepolymeren handelt es sich bevorzugt um niedermolekulare Verbindungen, die mindestens eine. bevorzugt mehr als eine, besonders bevorzugt zwei, mit Isocyanatgruppen reaktive Gruppen und mindestens eine ionische oder zur Ionenbildung befähigte Gruppe aufweisen. Als zur Anionenbildung befähigte Gruppen kommen z.B. Carboxyl-, Phosphorsäure- und Sulfonsäuregruppen in Betracht. Bevorzugte anionische Gruppen sind Carboxylgruppen. Als zur Kationenbildung befähigte Gruppen kommen beispielsweise primäre, sekundäre und tertiäre Aminogruppen oder Oniumgruppen, wie quartäre Ammonium-. Phosphonium- und/oder tertiäre Sulfoniumgruppen in Betracht. Bevorzugt sind anionische oder zur Anionenbildung befähigte Gruppen Geeignete mit Isocyanat reaktionsfähige Gruppen sind insbesondere Hydroxylgruppen sowie primäre und/oder sekundäre Aminogruppen.

Bevorzugte als Komponente a3) in Frage kommende Verbindungen sind solche, die Carboxyl- und Hydroxylgruppen enthalten. Beispiele für solche Verbindungen sind Hydroxyalkancarbonsäuren der folgenden allgemeinen Formel :

(HO)ₓQ(COOH)_{y}

worin
Q einen geraden oder verzweigten Kohlenwasserstoffrest mit 1 bis 12 C-Atomen darstellt und x und y jeweils 1 bis 3 bedeuten. Beispiele hierfür sind Zitronensäure und Weinsäure. Bevorzugt sind Carbonsäuren mit x = 2 und y = 1.

Eine bevorzugte Gruppe von Dihydroxyalkansäuren sind alpha,alpha-Dimethylolalkansäuren.

Bevorzugt sind alpha,alpha-Dimethylolpropionsäure und alpha,alpha-Dimethylolbuttersäure.

Weitere Beispiele für verwendbare Dihydroxyalkansäuren sind Dihydroxypropionsäure, Dimethylolessigsäure, Dihydroxybernsteinsäure oder Dihydroxybenzoesäure.

Weitere als Komponente a3) verwendbare Verbindungen sind aminogruppenhaltige Säuren, beispielsweise alpha,alpha-Diamino-valeriansäure. 3,4-Diaminobenzoesäure. 2,4-Diamino-toluol-sulfonsäure und 4,4-Diamino-di-phenylethersulfonsäure sowie Dihydroxyverbindungen, die eine tertiäre und/oder quaternäre Aminogruppe enthalten, wie beispielsweise N-Methyldiethanolamin, N-Methyldiisocyanat und 2-N,N-Dimethylamino-2-ethyl-1,3-propandiol.

Die Umsetzung der Komponenten a1), a2) und a3) miteinander erfolgt in üblicher dem Fachmann bekannter Weise, beispielsweise bei Temperaturen von 50 bis 120°C, bevorzugt 70 bis 100°C, gegebenenfalls unter Zusatz von Katalysatoren.

Die Komponenten a1), a2) und a3) werden in solchen Mengen umgesetzt, daß ein Umsetzungsprodukt mit freien Isocyanatgruppen entsteht, d.h. es wird mit einem Überschuß an Polyisocyanat gearbeitet. Beispielsweise kann mit einem Äquivalentverhältnis von NCO-Gruppen : OH-Gruppen von 1,1 : 1 bis 2,0 : 1, bevorzugt von 1,2 : 1 bis 1.9 : 1 gearbeitet werden.

Das in Stufe I erhaltene NCO-Gruppen enthaltende Polyurethanprepolymer wird anschließend in einer weiteren Stufe II) mit der Komponente a4) umgesetzt und so in ein harnstoffgruppenhaltiges und hydroxyfunktionelles Polyurethan umgewandelt. Bei der Komponente a4) handelt es sich um ein oder mehrere hydroxyfunktionelle Monoamine jeweils mit einer primären oder sekundären Aminogruppe. Die hydroxyfunktionellen Monoamine können dabei gegebenenfalls zusammen mit einem oder mehreren Polyolen eingesetzt werden. Die Umsetzung erfolgt dabei unter vollständigem Verbrauch der Aminogruppen. Die verwendbaren Monoamine können eine oder bevorzugt mehrere Hydroxylgruppen enthalten. Es kann sich beispielsweise um Alkanolamine, Dialkanolamine, Alkylalkanolamine und/oder Arylalkanolamine mit mindestens 2 und nicht mehr als 18 C-Atomen im Alkanol-, Alkyl- und Arylrest handeln. Beispiele für verwendbare Monoamine mit einer Hydroxylgruppe sind Monoethanolamin, N-Methylethanolamin, 3-Amino-1-propanol, 2-Amino-2-methylpropanol, N-Phenylmethanolamin und N-Cyclohexylethanolamin. Beispiele für Monoamine mit zwei und mehr Hydroxylgruppen sind Diethanolamin, Diisopropanolamin. 2-Amino-2-ethyl-1,3-propandiol und 2-Amino-2-hydroxymethylpropan-1,3-diol.

Die Hydroxyamine und gegebenenfalls vorhandene Polyole (Komponente a4) werden dabei in einer solchen Menge eingesetzt, daß im erhaltenen Umsetzungsprodukt OH-Zahlen von 20 bis 250, bevorzugt 40 bis 200, besonders bevorzugt von 60 bis 150 und Harnstoffgruppengehalte von 10 bis 300, bevorzugt von 20 bis 250 mmol in 100 g Festharz, resultieren. Hierbei wird eine vollständige Umsetzung angestrebt bei einem praktisch äquivalenten Molverhältnis zwischen reaktiver Aminogruppe und Isocyanatgruppe. Gegebenenfalls kann mit einem sehr kleinen NCO-Überschuß gearbeitet werden. Das Äquivalentverhältnis von NCO-Gruppen zu Aminogruppen sollte kleiner 1,05 : 1 sein, bevorzugt ist es jedoch 1 : 1.

Die neben den Hydroxyaminen gegebenenfalls vorhandenen Polyole können zur Einführung von Hydroxylgruppen in das Polyurethan dienen. Sie sind bevorzugt niedermolekulare Alkohole mit 2 oder mehr Hydroxylgruppen. Beispiele hierfür sind Neopentylglykol, Trimethylolpropan, Pentaerythrit, Dipentaerythrit und Glycerin, Hydroxypivalinsäureneopentylglykolester, 2-Ethyl-2-methyl-propandiol-1,3, Hexandiol-1,6, Cyclohexandimethanol und Ditrimethylolpropan.

Es ist jedoch auch möglich, zusätzlich zu den anionischen Gruppen einen Anteil an kationischen Gruppen in das Polyurethanharnstoffharz einzuführen. Dabei sollten die kationischen Gruppen äquivalentmäßig nur zu einem Anteil, bezogen auf die anionischen Gruppen, vorhanden sein. Bevorzugt handelt es sich bei den kationischen Gruppen um tertiäre und/oder quaternäre Aminogruppen. Beispielsweise können 0,05 bis 25 %, bevorzugt 0,1 bis 10 % an kationischen Gruppen, bezogen auf Äquivalente an anionischen Gruppen, vorhanden sein. Die Einführung zusätzlicher kationischer Gruppen kann beispielsweise durch Umsetzung des NCO-Prepolymeren mit Verbindungen mit mindestens einer Hydroxylgruppe und einer tertiären oder quaternären Aminogruppe erfolgen. Dabei kann beispielsweise so vorgegangen werden, daß die genannten Verbindungen mit tertiären und/oder quaternären Aminogruppen gemeinsam mit den Aminoalkoholen mit dem NCO-Prepolymer umgesetzt werden. Beispiele für Verbindungen mit mindestens einer Hydroxylgruppe und einer tertiären oder quaternären Aminogruppe sindd N-Methyldiethanolamin, N-Methyl-diisopropanol und 2-N,N-Dimethylamino-2-ethyl-1,3-propandiol.

Um eine ausreichende Wasserverdünnbarkeit zu erzielen, werden die ionischen bzw. in ionische Gruppen überführbaren Gruppen des Polyurethanharnstoffharzes zumindest teilweise in einer weiteren Stufe III neutralisiert. Die Neutralisation kann dabei vor oder nach der Umsetzung mit den Hydroxyaminen erfolgen. Bevorzugt enthalten die Polyurethanharze anionische Gruppen. Die anionischen Gruppen werden mit Basen neutralisiert. Bevorzugte Beispiele für basische Neutralisationsmittel sind tertiäre Amine wie Trimethylamin, Triethylamin, Dimethylethylamin, Dimethylbutylamin, N-Methylmorpholin, Dimethylethanolamin und Dimethylisopropanolamin. Isocyanatgruppenfreie Polyurethanharnstoffharze können auch mit Aminen neutralisiert werden, die isocyanatgruppenreaktive Gruppen enthalten, z.B. mit primären oder sekundären Aminen oder Aminoalkoholen.

Nach der Neutralisation wird das Polyurethanharnstoffharz in die wäßrige Phase überführt. Neutralisation und Überführung in die wäßrige Phase können jedoch auch gleichzeitig erfolgen.

Das Polyurethanharnstoffharz liegt in der wäßrigen Phase in einem kolloidalen Zustand vor und zeigt ein strukturviskoses Verhalten. Letzteres heißt, daß die Viskosität mit steigendem Geschwindigkeitsgefälle abnimmt. Die Viskosität der Polyurethanharnstoffdispersion liegt gemessen bei einem Geschwindigkeitsgefälle von 231 s⁻¹ und einem Festkörpergehalt von 35 Gew.-% bei 0,5 bis 10 Pas. Der Neutralisationsgrad beträgt bevorzugt 60 bis 120 %, besonders bevorzugt 70 bis 100 %. Die wäßrige Harzdispersion weist einen Feststoffgehalt von bevorzugt 25 bis 50 Gew.-%, besonders bevorzugt von 28 bis 42 Gew.-% auf.

Die Teilchengröße des Polyurethanharnstoffharzes in der wäßrigen Phase liegt bevorzugt im Bereich von 25 bis 200 nm, bevorzugt von 30 bis 100 nm.

Die wäßrige Polyurethanharnstoffdispersion kann bevorzugt beispielsweise folgende Zusammensetzung aufweisen:

| | |
|---|---|
| 20 bis 50 Gew.-Teile | des Polyurethanharnstoffharzes |
| 0.3 bis 18 Gew.-Teile | Neutralisationsmittel, bevorzugt Ammoniak und/oder Amin |
| 4 bis 25 Gew.-Teile | eines oder mehrerer zumindest teilweise mit Wasser |
| | mischbarer organischer Lösemittel und |
| 15 bis 75 Gew.-Teile | Wasser. |

Die erfindungsgemäße Bindemittelzusammensetzung enthält als Komponente B) 2,0 bis 25 Gew.-%, bezogen auf den Festkörpergehalt an eingesetztem Polyurethanharnstoffharz, eines oder mehrerer Polyetherpolyole mit einer Molmasse von 400 bis 5000, bevorzugt von 500 bis 3000 g/mol.

Beispiele für geeignete Polyetherpolyole sind Poly(oxytetramethylen)glykole, Poly(oxyethylen)glykole und Poly(oxypropylen)glykole oder gemischte Blockcopolymere, die unterschiedliche Oxytetramethylen-, Oxyethylen- und/oder Oxypropyleneinheiten enthalten. Bevorzugt sind Polyetherpolyole, die ohne Mitverwendung von Ethylenoxid. d.h. insbesondere unter ausschließlicher Verwendung von Propylenoxid oder Tetrahydrofuran erhalten werden. Besonders bevorzugt ist die Verwendung von Polyoxypropylenglykolen mit Molmassen von 500 bis 3000 g/mol. Es können dabei verschiedene Polyetherpolyole miteinander kombiniert werden.

Die Herstellung der erfindungsgemäßen Bindemittelzusammensetzung kann durch Vermischen der Komponenten A) und B) erfolgen. Das kann auf verschiedene Weise erfolgen. So ist es möglich, die Polyetherpolyole (Komponente B) zum wasserverdünnbaren Polyurethanharz (Komponente A) zuzugeben vor, während oder nach der Emulsionsbildung, d.h. vor, während oder nach der Überführung des wasserverdünnbaren Polyurethanharzes in die wäßrige Phase. Bevorzugt kann so verfahren werden, daß die Polyetherpolyole (KomponenteB) dem wasserverdünnbaren Polyurethanharz (Komponente A) vor der Überführung in die wäßrige Phase zugemischt werden. Erfolgt die Zugabe der Polyetherpolyole vor der Überführung in die wäßrige Phase, kann auch so vorgegangen werden, daß die Polyetherpolyole bereits gemeinsam mit den hydroxyfunktionellen Monoaminen zum NCO-Prepolymer zugegeben werden. Die Reaktionsbedingungen zur Umsetzung des NCO-Prepolymeren mit den hydroxyfunktionellen Monoaminen werden dabei in dem Fachmann geläufiger Weise so gewählt, daß eine Reaktion der NCO-Gruppen nur mit den Aminogruppen erfolgt.

Gegegebenfalls können die vorstehend beschriebenen wasserverdünnbaren Polyurethanharze (Komponente A) in Kombination mit Anteilen weiterer wasserverdünnbarer OH-funktioneller Harze eingesetzt werden. Als weitere wasserverdünnbare OH-funktionelle Harze kommen beispielsweise übliche wasserverdünnbare OH-funktionelle (Meth)acrylcopolymere, Polyesterharze und von den vorstehend beschriebenen wasserverdünnbaren Polyurethanharzen verschiedene, gegebenenfalls modifizierte, Polyurethanharze in Frage. Die weiteren wasserverdünnbaren OH-funktionellen Harze können dabei gemeinsam mit den wasserverdünnbaren Polyurethanharzen (Komponente A) und der Komponente B) durch Vermischen als Bindemittelzusammensetzung formuliert werden. Sie können jedoch auch separat zu der Bindemittelzusammensetzung aus Komponente A) und Komponente B) zugegeben werden.

Aus der erfindungsgemäßen Bindemittelzusammensetzung können vorteilhaft Pigmentpasten hergestellt werden. Zur Herstellung dieser Pigmentpasten geeignete Pigmente sind praktisch alle farb- und/oder effektgebenden Pigmente. Als farbgebende Pigmente sind alle lacküblichen Pigmente organischer oder anorganischer Natur geeignet. Beispiele für anorganische oder organische farbgebende Pigmente sind Titandioxid, mikronisiertes Titandioxid, Eisenoxidpigmente, Ruß, Azopigmente. Phthalocyaninpigmente. Chinacridon- oder Pyrrolopyrrolpigmente. Beispiele für effektgebende Pigmente sind Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente.

Die aus der erfindungsgemäßen Bindemittelzusammensetzung hergestellten Pigmentpasten können weiterhin Wasser und geringe Mengen an organischen Lösemitteln sowie lackübliche Additive enthalten.

Bei den in der Pigmentpaste gegebenenfalls vorhandenen organischen Lösemitteln handelt es sich um übliche lacktechnische Lösemittel. Diese können aus der Herstellung des Pastenbindemittels stammen oder werden separat zugegeben. Bevorzugt sind es wassermischbare Lösemittel. Beispiele für geeignete Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butoxyethanol, Glykole, z.B. Ethylenglykol, Propylenglykol, N-Methylpyrrolidon sowie Ketone, z.B. Methylethylketon, Aceton, Cyclohexanon. Die Lösemittel können anteilsweise aromatische oder aliphatische Kohlenwasserstoffe enthalten, wie z.B. Toluol, Xylol oder lineare oder verzweigte aliphatische C6 - C12-Kohlenwasserstoffe. Anteilmäßig liegen die organischen Lösemittel beispielsweise maximal bis zu 10 bis 15 Gew.-%, bezogen auf die gesamte Pigmentpaste, vor.

In die aus der erfindungsgemäßen Bindemittelzusammensetzung hergestellten Pigmentpasten können verschiedene Lackadditive eingearbeitet werden. Bei den Additiven handelt es sich um übliche auf dem Lacksektor einsetzbare und dem Fachmann bekannte Additive. Beispiele für Additive, die vorteilhafterweise bereits in der Pigmentpaste enthalten sein können sind Dispergiermittel, Netzmittel, Entschäumer. Katalysatoren und Substanzen zur pH-Wert-Einstellung.

Das Pigment-Bindemittel-Gewichtsverhältnis in der Pigmentpaste kann in relativ weiten Grenzen variieren. Es kann beispielsweise zwischen 0,3 : 1 und 20 : 1, bevorzugt zwischen 0,5 : 1 und 15 : 1 liegen. Das einzustellende Pigment-Bindemittel-Verhältnis ist dabei beispielsweise von Art und Teilchengröße der eingesetzten Pigmente abhängig. Bei Formulierungen mit feinteiligen transparenten Pigmenten und mit Farbruß kann beispielsweise mit einem Pigment-Bindemittel-Verhältnis von 0.8 : 1 bis 2,0 : 1 und bei Formulierungen mit grobteiligen deckenden Pigmenten, z.B. mit Titandioxid, mit einem Pigment-Bindemittel-Verhältnis von 4 : 1 bis 8 : 1 gearbeitet werden. Bei Formulierungen mit Metalleffektpigmenten, z.B. mit Aluminiumpigmenten, kann beispielsweise ein Pigment-Bindemittel-Verhältnis von 1.5 : 1 bis 2.5 : 1 eingestellt werden.

Die Pigmentpasten mit den erfindungsgemäßen Bindemittelzusammensetzungen können in üblicher Weise hergestellt werden. So können die einzelnen Bestandteile der Pigmentpaste miteinander vermischt und dann in bekannten Dispergieraggregaten, z.B. in Rührscheibengeräten, Dreiwalzenstühlen, Kugelmühlen, Sand- oder Perlmühlen, vermahlen werden. Diese Vorgehensweise findet insbesondere Anwendung, wenn farbgebende Pigmente eingesetzt werden. Aggregate, Dispergierzeiten und weitere Dispergierbedingungen hängen dabei im wesentlichen von den eingesetzten Pigmenten ab. Sollen Pigmentpasten mit effektgebenden Pigmenten, z.B. mit Aluminiumpigmenten oder Interferenzpigmenten, hergestellt werden, dann genügt ein einfaches Verrühren bzw. Vermischen der Pigmente mit dem Pastenbindemittel und gegebenenfalls den weiteren Bestandteilen der Pigmentpaste. Es ergeben sich in der Pigmentpaste in Abhängigkeit vom eingesetzten Pigment beispielsweise Festkörperanteile von 25 bis 85 Gew.-%.

Die Pigmentpaste kann bevorzugt beispielsweise 5 bis 90 Gew.-Teile Pigment und 10 bis 95 Gew.-Teile der erfindungsgemäßen wäßrigen Bindemittelzusammensetzung enthalten. Zusätzlich können bevorzugt beispielsweise 0 bis 40 Gew.-Teile Wasser, 0 bis 10 Gew.-Teile organische Lösemittel, 0 bis 5 Gew.-Teile Neutralisationsmittel und 0 bis 5 Gew.-Teile Hilfsmittel -zugesetzt werden. Die vorstehend genannten Gewichtsteile sollen sich dabei auf 100 Gewichtsteile addieren.

Es ist auch möglich, in der Pigmentpaste die erfindungsgemäßen Bindemittelzusammensetzungen mit Anteilen weiterer Pastenharze, die ebenfalls OHfunktionell sein können, zu kombinieren. Bei den gegebenenfalls verwendbaren weiteren Pastenharzen kann es sich beispielsweise um Melaminharze, Polyesterharze, Poly(meth)acrylate und/oder von den erfindungsgemäßen Bindemittelzusammensetzungen verschiedene, gegebenenfalls modifizierte Polyurethanharze handeln.

Die Erfindung betrifft auch wäßrige Beschichtungsmittel, welche die erfindungsgemäßen Bindemittelzusammensetzungen enthalten. Die wäßrigen Beschichtungsmittel können die erfindungsgemäßen Bindemittelzusammensetzungen dabei als Pastenharz in Form einer Pigmentpaste enthalten. Es ist jedoch auch möglich, daß die wäßrigen Beschichtungsmittel die erfindungsgemäßen Bindemittelzusammensetzungen als Pastenharz und/oder als Hauptbindemittel (Auflackbindemittel) enthalten.

Zur Herstellung der wäßrigen Beschichtungsmittel werden die die erfindungsgemäßen Bindemittetzusammensetzungen enthaltenden Pigmentpasten mit weiterem Bindemittel, dem eigentlichen Hauptbindemittel, komplettiert bzw. aufgelackt. Als Auflackbindemittel geeignet sind alle mit dem Pastenharz verträglichen wasserverdünnbaren Bindemittel, die üblicherweise zur Herstellung von Wasserbasislacken und Wasserdecklacken für die Fahrzeug- und Industrielackierung eingesetzt werden. Beispiele für einsetzbare wasserverdünnbare Harze sind Polyurethanharze, Polyesterurethanharze, fettsäuremodifizierte Polyesterurethanharze. acrylierte Polyurethan- und/oder acrylierte Polyesterharze sowie Poly(meth)acrylatharze. Die Auflackbindemittel können einzeln oder in Kombination eingesetzt werden. Bevorzugt werden Polyurethanharze und modifizierte Polyurethanharze eingesetzt. Besonders bevorzugt werden. Mischungen verschiedener Polyurethanharze eingesetzt. Es ist jedoch auch möglich, die Polyurethanharze in Kombination mit anderen wasserverdünnbaren Harzen, z.B. mit wasserverdünnbaren Polyacrylat- und/oder Polyesterharzen. einzusetzen. Geeignete Polyurethanharze und geeignete Mischungen von Polyurethanharzen sind z.B. beschrieben in DE-A-43 39 085, DE-A-39 36 794, DE-A-43 44 063, DE-A-41 15 042, DE-A-41 15 015, DE-A-43 23 896, DE-A-41 22 265, DE-A-42 28 510, DE-A-196 43 802, EP-A-089 497, EP-A-297 576.

Ebenso ist es möglich, als Auflackbindemittel die erfindungsgemäße Bindemittelzusammensetzung einzusetzen.

Die mit den erfindungsgemäßen Bindemittelzusammensetzungen hergestellten wäßrigen Beschichtungsmittel können gegebenenfalls auch Vernetzer enthalten. Bei den Vernetzern kann es sich beispielsweise um Formaldehyd-Kondensationsharze, wie Phenol-Formaldehyd- und Amin-Formaldehydkondensationsharze, sowie um blockierte und nicht blockierte Polyisocyanate handeln. Als Vernetzer geeignete Aminharze sind beispielsweise alkylierte Kondensate, die durch Umsetzung von Aminotriazinen und Amidotriazinen mit Aldehyden hergestellt werden. Dazu werden nach bekannten Verfahren Amine oder Aminogruppen tragende Verbindungen, wie Melamin, Guanamin, Benzoguanamin oder Harnstoff, in Gegenwart von Alkoholen, wie Methanol, Ethanol, Propanol, Butanol oder Hexanol, mit Aldehyden, insbesondere Formaldehyd kondensiert.

Als Vernetzer geeignete Polyisocyanate sind beispielsweise beliebige organische Polyisocyanate mit aliphatisch, cycloaliphatisch, araliphatisch und/oder aromatisch gebundenen freien Isocyanatgruppen. Sie sind bei Raumtemperatur flüssig oder durch Zusatz organischer Lösemittel verflüssigt. Die Polyisocyanate weisen bei 23°C im allgemeinen eine Viskosität von 1 bis 6000 mPas, vorzugsweise über 5 und unter 3000 mPas auf. Derartige Polyisocyanate sind allgemein bekannt und z.B. beschrieben in DE-A 38 29 587 oder DE-A 42 26 243.

Bevorzugt handelt es sich bei den Polyisocyanaten um Polyisocyanate oder Polyisocyanat- gemische mit ausschließlich aliphatisch und/oder cycloaliphatisch gebundenen Isocyanat- gruppen mit einer mittleren NCO-Funktionalität von 1,5 bis 5, bevorzugt 2 bis 3.

Besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)-methan und die an sich bekannten Biuret-. Allophanat-, Urethan- und/oder Isocyanuratgruppen aufweisenden Derivate dieser Diisocyanate. Es können auch Triisocyanate wie Nonantriisocyanat eingesetzt werden. Ebenfalls sehr gut geeignet sind auch sterisch gehinderte Polyisocyanate. Beispiele hierfür sind 1,1,6,6-Tetramethyl-hexamethylendiisocyanat, 1,5-Dibutyl-pentamethyldiisocyanat, p- oder m-Tetramethylxylylendiisocyanat und die entsprechenden hydrierten Homologen. Diese Diisocyanate können auch in geeigneter Weise zu höherfunktionellen Verbindungen umgesetzt werden, beispielsweise durch Trimerisierung oder durch Umsetzung mit Wasser oder Trimethylolpropran.

Als Vernetzer können auch blockierte Polyisocyanate eingesetzt werden. Es handelt sich hierbei beispielsweise um die vorstehend bereits genannten Polyisocyanate, welche mit üblichen flüchtigen einwertigen Blockierungsmitteln blockiert sind. Als Blockierungsmittel dienen z. B. Alkylmonoalkohole, Phenole, Oxime, Amine, Phthalimid oder beta-Ketoverbindungen.

Es können jedoch auch weitere in der Lackindustrie bekannte Vernetzer eingesetzt werden, sofern in den eingesetzte Bindemitteln die entsprechenden reaktiven Gruppen zur Verfügung stehen.

Die Vernetzer können einzeln oder im Gemisch eingesetzt werden.

Es handelt sich dabei um die in der Lackindustrie üblichen Vernetzer, die in der Literatur umfassend beschrieben und als Handelsprodukte erhältlich sind.

Sollen in den Beschichtungsmitteln Vernetzer eingesetzt werden, so richtet sich die Auswahl der Vernetzer nach den vernetzbaren funktionellen Gruppen des oder der Auflackbindemittel und/oder des Pastenbindemittels. Besonders vorteilhafte Bindemittelsysteme sind solche. die mit Hydroxylgruppen reaktive Vernetzer enthalten, da dann das Pastenbindemittel mit seinen Hydroxylgruppen in die Vernetzungsreaktion mit einbezogen werden kann. Dabei ist es nicht zwingend notwendig, daß auch das Auflackbindemittel vernetzbare funktionelle Gruppen enthält. Bei den Auflackbindemitteln kann es sich z.B. auch um physikalisch trocknende Bindemittel handeln, so daß eine Vernetzungsreaktion nur zwischen Pastenharz und Vernetzer stattfindet.

Die mit den erfindungsgemäßen Bindemittelzusammensetzungen hergestellten wäßrigen Beschichtungsmittel können desweiteren Wasser, geringe Anteile an organischen Lösemitteln und lackübliche Additive enthalten. Beispiele für lackübliche Additive sind Verlaufsmittel, rheologiebeeinflussende Mittel, wie hochdisperse Kieselsäure oder polymere Harnstoffverbindungen, Verdicker, wie anvernetzte Polycarbonsäure oder Polyurethane, Entschäumer, Netzmittel, Antikratermittel und Härtungsbeschleuniger. Die Additive werden in üblichen, dem Fachmann bekannten Mengen eingesetzt. Die wäßrigen Beschichtungsmittel können auch vernetzte Polymermikroteilchen enthalten.

Den wäßrigen Beschichtungsmitteln können Effektpigmente, wie z.B. die vorstehend genannten Aluminium- und/oder Interfernzpigmente, auch in üblicher Art und Weise, z.B. in Form einer Lösemittelanteigung, und nicht als Pastenharz enthaltende Pigmentpaste zugegeben werden.

In den Beschichtungsmitteln können Anteile organischer Lösemittel vorhanden sein. bevorzugt nicht mehr als 20 Gew.-%, besonders bevorzugt nicht mehr als 15 Gew.-%. Die organischen Lösemittel sind bevorzugt wassermischbar. Es handelt sich um übliche lacktechnische Lösemittel. Diese können aus der Herstellung der Bindemittel stammen oder werden separat zugegeben. Beispiele für solche Lösemittel sind die vorstehend bereits genannten, zur Herstellung der Pigmentpasten einsetzbaren Lösemittel.

Zur Herstellung der Beschichtungsmittel werden die Pigmentpaste und/oder das oder die Auflackbindemittel und die weiteren Bestandteile gut miteinander vermischt und in üblicher Weise homogenisiert. Aufgrund der guten Benetzungseigenschaften des Pastenbindemittels geschieht das Auflacken unter Erhalt des Dispergierzustandes, d.h. es wird eine Flockulation der Pigmente verhindert.

Sollen Lacke hergestellt werden, die sowohl farbgebende als auch Effektpigmente enthalten, ist es günstig, Pigmentpasten mit den farbgebenden Pigmenten und separat Pigmentpasten mit den Effektpigmenten herzustellen und dann beide Pigmentpasten bei der Formulierung des Lackes zu vereinen.

Die die erfindungsgemäßen Bindemittelzusammensetzungen enthaltenden Beschichtungsmittel können auf Basis physikalisch trocknender oder chemisch vernetzender Bindemittel formuliert sein. Handelt es sich beispielsweise um zweikomponentige Beschichtungsmittel, müssen die miteinander reaktiven Bindemittelkomponenten getrennt gelagert werden und können erst kurz vor der Applikation miteinander vermischt werden.

Generell kann vor der Applikation bei Bedarf mit Wasser oder organischen Lösemitteln noch auf Spritzviskosität eingestellt werden.

Die Härtungsbedingungen richten sich nach der Wahl der Bindemittel und der möglichen Vernetzer. Die Beschichtungsmittel erfordern bei entsprechender Wahl der Vernetzer, z.B. bei Polyisocyanatvernetzern, kein Einbrennen und können bei Raumtemperatur oder forciert bei höheren Temperaturen, z.B. bis 80°C, bevorzugt bis 60°C, gehärtet werden. Sie können jedoch auch, beispielsweise mit Melaminharzen und/oder blockierten Polyisocyanaten, bei höheren Temperaturen von beispielsweise 80 bis 150°C gehärtet werden.

Die die erfindungsgemäßen Bindemittelzusammensetzungen enthaltenden wäßrigen Beschichtungsmittel sind besonders geeignet zur Herstellung von farb- und/oder effektgebenden Basisschichten sowie pigmentierten Decklackschichten in einer Mehrschichtlackierung. Bevorzugtes Anwendungsgebiet.ist die Fahrzeug- und Fahrzeugteilelackierung. Die erfindungsgemäßen Bindemittelzusammensetzungen und die sie enthaltenden Beschichtungsmittel sind, je nach Härtungsbedingungen, sowohl für die Fahrzeugreparaturlackierung (Härtungstemperaturen von beispielsweise 20 bis 80°C) als auch die Fahrzeugserienlackierung (Härtungstemperaturen von beispielsweise 100 bis 140°C) anwendbar.

Andere industrielle Anwendungen sind jedoch auch möglich.

Die Erfindung betrifft daher auch die Verwendung der die erfindungsgemäßen Bindemittelzusammensetzungen enthaltenden Beschichtungsmittel in einem Verfahren zur Mehrschichtlackierung, bei dem auf ein gegebenenfalls vorbeschichtetes Substrat. z.B. auf ein mit einer Grundierung vorbeschichtetes Substrat, eine Füllerschicht aufgebracht wird und auf die Füllerschicht eine Decklackschicht appliziert wird, wobei die Decklackschicht in Form eines pigmentierten Einschichtdecklackes oder in Form einer farb- und/oder effektgebenden Basislackschicht und einer darauf applizierten Klarlackschicht aufgebracht werden kann und wobei der Einschichtdecklack und der Basislack die erfindungsgemäßen Bindemittelzusammensetzungen enthalten. Der Klarlack kann entweder nach Trocknung bzw. Härtung oder naß-in-naß, gegebenenfalls nach kurzem Ablüften, auf den Basislack aufgebracht werden. Als Klarlacke sind grundsätzlich alle bekannten nicht oder transparent pigmentierten Beschichtungsmittel, wie sie beispielsweise bei der Kraftfahrzeuglackierung üblich sind, geeignet. Es kann sich dabei um ein- oder zweikomponentige Klarlacke auf Lösemittel- oder Wasserbasis oder um Pulyerklarlacke handeln.

Die Applikation der Beschichtungsmittel erfolgt nach üblichen Methoden, bevorzugt mittels Spritzapplikation.

Als Substrate sind Metall- und Kunststoffsubstrate, insbesondere die in der Automobilindustrie bekannten Substrate. geeignet, wie z.B. Eisen, Zink, Aluminium, Magnesium, Edelstahl oder deren Legierungen, sowie Polyurethane, Polycarbonate oder Polyolefine.

Aus den erfindungsgemäßen Bindemittelzusammensetzungen hergestellte Pigmentpasten und/oder Wasserlacke sind frost- und lagerstabil. Sie zeigen auch nach längerer Lagerung kein Absetzen der Pigmente. Es werden hochglänzende Überzüge mit hoher Chemikalienbeständigkeit und sehr guter Härte erhalten. Werden Pigmentpasten mit Metallpigmenten, insbesondere Alumiumpigmenten hergestellt und in entsprechende Beschichtungsmittel eingearbeitet, dann weisen diese Beschichtungsmittel einen erheblich geringeren Lösemittelanteil auf als auf üblichem Weg mit einer Lösemittelanteigung der Aluminiumpigmente hergestellte Metalleffektlacke. Die Beschichtungen zeigen einen sehr guten Metallic-Effekt. Im Gegensatz zu hochmolekularen Dispersionen oder Emulsionen sind die erfindungsgemäßen Bindemittelzusammensetzungen scherstabil, so daß sie zum Anreiben von Pigmenten besonders gut geeignet sind. Aufgrund ihrer sehr guten Benetzungsfähigkeit können auch besonders hochkonzentrierte Pigmentpasten hergestellt werden.

Aus den erfindungsgemäßen Bindemittelzusammensetzungen hergestellte Pigmentpasten, insbesondere weiß pigmentierte Pasten, ergeben Beschichtungsmittel mit sehr guter Deckfähigkeit. Mit den erfindungsgemäßen Pastenbindemitteln kann als Farbton auch ein Tiefschwarz formuliert werden.

Die Erfindung soll an den folgenden Beispielen näher erläutert werden.

### 1. Beispiel

### Herstellung einer Polyurethanharnstoffdispersion

In einem 21-Kolben mit Rührer und Thermometer werden jeweils Position 1-3 eingewogen, unter Schutzgas auf 80°C geheizt und solange gehalten, bis die Dimethylolpropionsäure vollständig gelöst ist. Es wird auf 50°C gekühlt. Position 4 zugegeben und wieder auf 80°C geheizt. Der Ansatz wird solange bei 80°C gehalten. bis die Isocyanatzahl (bezogen auf Lösung) 4,2 bis 4,5 % beträgt. Dann wird auf ca. 40°C gekühlt und Position 5 und 6 werden gemeinsam zugegeben (exotherme Reaktion). Nach einer Stunde bei 80°C ist die Isocyanatzahl kleiner 0,1 %. Dann wird Position 7 bei 80°C zugegeben. Nach 15 Minuten wird mit Position 8 verdünnt, auf einen Festkörpergehalt von ca. 35 % eingestellt und eine Stunde bei 50°C homogen gerührt. Im folgenden sind die Positionen für 4 Polyurethandispersionen angegeben. Gew.-T. sind Gewichtsteile.
- VE-Wasser:: durch Destillation oder mit Hilfe von Ionenaustauschern hergestelltes vollentsalztes oder entionisiertes Wasser.

### Polyurethandispersion 1:

| | | |
|---|---|---|
| 1. | 17,21 Gew.-T. | handelsüblicher aliphatischer linearer Polyester mit OHZ 106 |
| 2. | 2.25 Gew.-T. | Dimethylolpropionsäure |
| 3. | 6,14 Gew.-T. | N-Methylpyrrolidon |
| 4. | 11,50 Gew.-% | Isophorondiisocyanat |
| 5. | 2,29 Gew.-T. | Monoethanolamin |
| 6. | 1,75 Gew.-T. | Polypropylenglykol mit Molmasse von ca. 900 |
| 7. | 2,13 Gew.-T. | einer 1 : 1-Mischung aus Dimethylethanolamin und VE- |
| | | Wasser |
| 8. | 56,73 Gew.-T. | VE-Wasser (vollentsalztes Wasser) |

### Endwerte:

Festkörper (30 min, 150°C): 35 % in N-Methylpyrrolidon/Butoxyethanol/VE-Wasser Säurezahl: 28
MEQ(Amin): 34,0 (Milliäquivalente Amin bezogen auf 100 g Festharz) Neutralisationsgrad: ca. 70 %
OH-Zahl: 66
Viskosität (gemessen bei 25°C mit einem Rotationsmeßgerät bei einem Geschwindigkeitsgefälle von 231 s⁻¹: 1,405 Pas
Harnstoffgruppengehalt: 107 mmol in 100 g Festharz
Urethangruppengehalt: 189 mmol in 100 g Festharz

### Polyurethandispersion 2:

| | | |
|---|---|---|
| 1. | 16,96 Gew.-T. | handelsübliches Polycarbonatdiol mit OHZ 115 mg KOH/g |
| 2. | 2,29 Gew.-T. | Dimethylolpropionsäure |
| 3. | 6,15 Gew.-T. | N-Methylpyrrolidon |
| 4. | 11,74 Gew.-T | Isophorondiisocyanat |
| 5. | 2,26 Gew.-T. | Monoethanolamin |
| 6. | 1,75 Gew.-T. | Polypropylenglykol mit Molmasse ca. 900 |
| 7. | 2,28 Gew.-T. | einer 1 : 1-Mischung aus Dimethylethanolamin und VE-Wasser |
| 8. | 56.57 Gew.-T. | VE-Wasser |

### Endwerte:

Festkörper (30 min, 150°C): 35 % in N-Methylpyrrolidon/Butoxyethanol/VE-Wasser
Säurezahl: 28,0
MEQ(Amin): 37
Neutralisationsgrad: ca. 75 %
OH-Zahl: 65
Viskosität (gemessen bei 25°C mit einem Rotationsmeßgerät bei einem Geschwindigkeitsgefälie von 231 s⁻¹: 1,60 Pas
Harnstoffgruppengehalt: 106 mmol in 100 g Festharz
Urethangruppengehalt: 196 mmol in 100 g Festharz

### Polyurethandispersion 3:

| | | |
|---|---|---|
| 1. | 15,70 Gew.-T. | handelsüblicher aliphatischer linearer Polyester mit OHZ 106 |
| 2. | 2,05 Gew.-T. | Dimethylolpropionsäure |
| 3. | 5,59 Gew.-T. | N-Methylpyrrolidon |
| 4. | 10,48 Gew.-T | Isophorondiisocyanat |
| 5. | 3,59 Gew.-T. | Diethanolamin |
| 6. | 3,18 Gew.-T. | Polypropylenglykol mit Molmasse von ca. 900 |
| 7. | 2,03 Gew.-T. | einer 1:1-Mischung aus Dimethylethanolamin und VE-Wasser |
| 8. | 57,38 Gew.-T. | VE-Wasser |

### Endwerte:

Festkörper (30 min, 150°C): 35 % in N-Methylpyrrolidon/Butoxyethanol/VE-Wasser
Säurezahl: 25,0
MEQ(Amin): 33
Neutralisationsgrad: ca. 74 %
OH-Zahl: 120
Viskosität (gemessen bei 25°C mit einem Rotationsmeßgerät bei einem
Geschwindigkeitsgefälle von 231 s⁻¹: 0,905 Pas
Harnstoffgruppengehalt: 98 mmol in 100 g Festharz
Urethangruppengehalt: 172 mmol in 100 g Festharz

### Polyurethandispersion 4:

| | | |
|---|---|---|
| 1. | 16,44 Gew.-T. | handelsüblicher aliphatischer linearer Polyester mit OHZ 106 |
| 2. | 2,15 Gew.-T. | Dimethylolpropionsäure |
| 3. | 5,86 Gew.-T. | N-Methylpyrrolidon |
| 4. | 10,98 Gew.-T | Isophorondiisocyanat |
| 5. | 3,76 Gew.-T. | Diethanolamin |
| 6. | 1,67 Gew.-T. | Polypropylenglykol mit Molmasse von ca. 900 |
| 7. | 2,03 Gew.-T. | einer 1 : 1-Mischung aus Dimethylethanolamin und VE- |
| | | Wasser |
| 8. | 57,11 Gew.-T. | VE-Wasser |

### Endwerte:

Festkörper (30 min, 150°C): 35 % in N-Methylpyrrolidon/Butoxyethanol/VE-Wasser
Säurezahl: 26,1
MEQ(Amin): 31,1
Neutralisationsgrad: ca. 67 %
OH-Zahl: 120
Viskosität (gemessen bei 25°C mit einem Rotationsmeßgerät bei einem Geschwindigkeitsgefälle von 231 s⁻¹: 1,116 Pas
Harnstoffgruppengehalt: 102 mmol in 100 g Festharz
Urethangruppengehalt: 181 mmol in 100 g Festharz

### 2. Beispiel

### Herstellung von Pigmentpasten

### 2.1. Herstellung einer Schwarzpaste

Folgenden Bestandteile werden miteinander vermischt und in einer Perlmühle dispergiert:
- 41.0 Gew.-% der Polyurethandispersion 1
- 16,0 Gew.-% Farbruß
- 29,5 Gew.-% VE-Wasser
- 4,0 Gew.-% eines handelsüblichen ionischen Netzmittels
- 0,5 Gew.-% Siliconentschäumer

### 2.2. Herstellung einer Weißpaste

Folgenden Bestandteile werden miteinander vermischt und in einem Dissolver dispergiert:
- 26,0 Gew.-% der Polyurethandispersion 2
- 68,0 Gew.-% Titandioxid
- 2,0 Gew.-% VE-Wasser
- 2,0 Gew.-% Butoxyethanol
- 1,0 Gew.-% einer 10 %igen Dimethylethanolamin-Lösung
- 1,0 Gew.-% anionisches Netzmittel

### 2.3. Herstellung einer Broncepaste

Folgende Bestandteile werden unter Rühren gut miteinander vermischt:
- 49,0 Gew.-% der Polyurethandispersion 3
- 46,0 Gew.-% einer handelsüblichen 65 %igen Broncepaste
- 5,0 Gew.-% n-Butanol

### 2.4. Herstellung einer Iriodinpaste

60,0 Gew.-% der Polyurethandispersion 4 und 40.0 Gew.-% eines handelsüblichen Iriodinpigmentes werden unter Rühren gut miteinander vermischt.

Die so hergestellten Pigmentpasten sind jeweils gut verarbeitbar. Sie sind lagerstabil und zeigen auch nach einer Lagerzeit von 12 Monaten kein Absetzen der Pigmente.

Die Pigmentpasten sind froststabil. Zur Prüfung auf Froststabilität wurden die Pasten bei -5°C und -10°C eingefroren und 72 Stunden bei dieser Temperatur gehalten. Danach wurde das Material innerhalb von 24 Stunden bei Raumtemperatur aufgetaut. Ein Vergleich direkt nach dem Auftauen, nach 7 und 28 Tagen jeweils mit einer unbehandelten Pigmentpaste zeigte, daß die behandelten Pigmentpasten nur eine geringfügig erhöhte Viskosität gegenüber einer unbehandelten Pigmentpaste aufwiesen.

### 3. Beispiel

### Herstellung von Wasserbasislacken

### 3.1. Herstellung eines schwarzen Wasserbasislackes

Folgende Bestandteile wurden unter Rühren gut miteinander vermischt:
- 15,07 Gew.-% einer Polyurethandispersion entsprechend DE-A-196 43 802, Herstellungsbeispiel 1, Polyurethandispersion A)
- 17,84 Gew.-% einer Polyurethandispersion entsprechend DE-A-196 43 802, Herstellungsbeispiel 2, Polyurethandispersion B)
- 22,80 Gew.-% Schwarzpaste entsprechend Beispiel 2.1.
- 29,30 Gew.-% VE-Wasser
- 5,45 Gew.-% Butoxyethanol
- 2,20 Gew.-% Shellsol ® T
- 5,71 Gew.-% handelsüblicher Acrylatverdicker (10 %ige wäßrige Lösung)
- 1,63 Gew.-% 10 %ige Dimethylethanolamin-Lösung

### 3.2. Herstellung eines weißen Wasserbasislackes

Folgende Bestandteile wurden unter Rühren gut miteinander vermischt:
- 15,05 Gew.-% einer Polyurethandispersion entsprechend DE-A-196 43 802, Herstellungsbeispiel 1, Polyurethandispersion A)
- 17.81 Gew.-% einer Polyurethandispersion entsprechend DE-A-196 43 802. Herstellungsbeispiel 2, Polyurethandispersion B)
- 29,40 Gew.-% Weißpaste entsprechend Beispiel 2.2.
- 24,95 Gew.-% VE-Wasser
- 5,45 Gew.-% Butoxyethanol
- 5,71 Gew.-% handelsüblicher Acrylatverdicker (10 %ige wäßrige Lösung)
- 1,63 Gew.-% 10 %ige Dimethylethanolamin-Lösung

### 3.3. Herstellung eines Metallic-Wasserbasislackes

Folgende Bestandteile wurden unter Rühren gut miteinander vermischt:
- 19.56 Gew.-% einer Polyurethandispersion entsprechend DE-A-196 43 802, Herstellungsbeispiel 1. Polyurethandispersion A)
- 23,15 Gew.-% einer Polyurethandispersion entsprechend DE-A-196 43 802, Herstellungsbeispiel 2. Polyurethandispersion B)
- 10.00 Gew.-% Broncepaste entsprechend Beispiel 2.3.
- 32,92 Gew.-% VE-Wasser
- 3,83 Gew.-% Butoxyethanol
- 1.00 Gew.-% n-Butanol
- 7,42 Gew.-% handelsüblicher Acrylatverdicker (10 %ige wäßrige Lösung)
- 2,12 Gew.-% 10 %ige Dimethylethanolamin-Lösung

### 3.4. Herstellung eines Iriodin-Wasserbasislackes

Folgende Bestandteile wurden unter Rühren gut miteinander vermischt:
- 15,96 Gew.-% einer Polyurethandispersion entsprechend DE-A-196 43 802, Herstellungsbeispiel 1. Polyurethandispersion A)
- 18.89 Gew.-% einer Polyurethandispersion entsprechend DE-A-196 43 802, Herstellungsbeispiel 2, Polyurethandispersion B)
- 25.00 Gew.-% Iriodinpaste entsprechend Beispiel 2.4.
- 28.24 Gew.-% VE-Wasser
- 3,13 Gew.-% Butoxyethanol
- 1,00 Gew.-% n-Butanol
- 6,05 Gew.-% handelsüblicher Acrylatverdicker (10 %ige wäßrige Lösung)
- 1,73 Gew.-% 10 %ige Dimethylethanolamin-Lösung

Die so erhaltenen Wasserbasislacke sind über einen Zeitraum von mindestens 36 Monaten lagerstabil.

Kurz vor der Applikation wurde jeweils ein handelsüblicher Polyisocyanatvernetzer auf Basis HDI-Trimer in einer solchen Menge zugesetzt, daß das Äquivalentverhältnis von Hydroxyl- zu Isocyanatgruppen 1 : 1 betrug.

Die Wasserbasislacke wurden auf mit üblichen Grundierungs- und Füllerschichten vorbeschichtete Metallsubstrate appliziert, nach kurzem Ablüften mit lösemittelbasierenden 2K-Klarlacken (Basis Polyhydroxyacrylatharz/Polyisocyanat) überlackiert und 30 Minuten bei 60°C gehärtet. Die erhaltenen Beschichtungen zeigen sehr gute Härte und Chemikalienbeständigkeit, gute Deckfähigkeit und die Metallic-Lackierungen einen sehr guten Metallic-Effekt, hohe Aufsichtshelligkeit und gute Haftung zum Untergrund.

## Patentansprüche

1. Wasserverdünnbare Bindemittelzusammensetzung, enthaltend
A) ein oder mehrere wasserverdünnbare hydroxyfunktionelle Polyurethanharnstoffharze mit einem Harnstoffgruppengehalt (berechnet als -NHCONH-) von 10 bis 300 mmol in 100 g Festharz, einem Urethangruppengehalt (berechnet als -NHCOO-) von 20 bis 300 mmol in 100 g Festharz, einer OH-Zahl von 20 bis 250 und einer zahlenmittleren Molmasse Mn von 1000 bis 20000 g/mol, welche erhältlich sind durch
I) Herstellung eines NCO-Gruppen enthaltenden Polyurethanprepolymeren durch Umsetzung
a1) eines oder mehrerer hydroxyfunktioneller Verbindungen mit einer zahlenmittleren Molmasse Mn von 360 bis 8000 g/mol, mit
a2) einem oder mehreren Polyisocyanaten und
a3) mindestens einer Verbindung mit mindestens einer mit Isocyanat reaktiven Gruppe und mindestens einer ionischen oder zur Ionenbildung befähigten Gruppe,
II) nachfolgende Umsetzung des NCO-Gruppen enthaltenden Polyurethanprepolymeren mit
a4) einem oder mehreren hydroxyfunktionellen Monoaminen sowie gegebenenfalls mit einem oder mehreren Polyolen, in solchen Mengenverhältnissen, daß das resultierende Polyurethan die gewünschten Hydroxylzahlen sowie Harnstoff- und Urethangruppenanteile aufweist,
III) zumindest teilweise Neutralisation der ionischen Gruppen bzw. der in ionische Gruppen überführbaren Gruppen des erhaltenen Polyurethans vor oder nach der Umsetzung in Stufe II und Überführung des erhaltenen Umsetzungsproduktes in die wäßrige Phase,
und
B) 2,0 bis 25 Gew.-%, bezogen auf den Festkörpergehalt an eingesetztem Polyurethanharnstoffharz, eines oder mehrerer Polyetherpolyole mit einer Molmasse von 400 bis 5000 g/mol.

2. Bindemittelzusammensetzung nach Anspruch 1, **dadurch gekennzeichnet, daß** ein oder mehrere wasserverdünnbare hydroxyfunktionelle Polyurethanharnstoffharze mit einem Harnstoffgruppengehalt (berechnet als - NHCONH-) von 20 bis 250 mmol in 100 g Festharz, einem Urethangruppengehalt (berechnet als -NHCOO-) von 80 bis 250 mmol in 100 g Festharz, einer OH-Zahl von 40 bis 200, einer Säurezahl von 15 bis 80 und einer zahlenmittleren Molmasse Mn von 1500 bis 15000 g/mol enthalten sind.

3. Bindemittelzusammensetzung nach Anspruch 1 oder 2, **dadurch gekennzeichnet, daß** es sich bei der Komponente a1) um hydroxyfunktionelle lineare oder verzweigte Verbindungen mit einer OH-Funktionalität von 2 bis 3, einer OH-Zahl von 50 bis 250 und einer zahlenmittleren Molmasse Mn von 360 bis 8000 g/mol handelt.

4. Bindemittelzusammensetzung nach Anspruch 1, 2 oder 3, **dadurch gekennzeichnet, daß** als Komponente a1) Polyesterpolyole, Polyetherpolyole, Polycarbonatpolyole, Polylactonpolyole und oder Poly(meth)acrylatpolyole eingesetzt werden.

5. Pigmentpaste, enthaltend eine Bindemittelzusammensetzung gemäß einem der Ansprüche 1 bis 4 als Pastenharz und ein oder mehrere Pigmente in einem Pigment-Bindemittel-Gewichtsverhältnis von 0,3 : 1 bis 20 : 1 sowie gegebenenfalls Wasser, organische Lösemittel und/oder lackübliche Additive.

6. Verwendung der Pigmentpaste nach Anspruch 5 zur Herstellung von pigmentierten Basislack- oder Decklackschichten bei der Mehrschichtlackierung.

7. Verwendung der Pigmentpaste gemäß Anspruch 5 bei der Lackierung von Fahrzeugen und Fahrzeugteilen.

8. Verwendung der Bindemittelzusammensetzung gemäß einem der Ansprüche 1 bis 4 bei der Herstellung von Mehrschichtlackierungen, insbesondere bei der Lackierung von Fahrzeugen und Fahrzeugteilen.

## Claims

1. Water-dilutable binder composition comprising
A) one or more water-dilutable hydroxy-functional polyurethane-urea resins having a urea group content (calculated as -NHCONH-) of 10 to 300 mmol in 100 g of solid resin, a urethane group content (calculated as -NHCOO-) of 20 to 300 mmol in 100 g of solid resin, an OH number of 20 to 250 and a number-average molecular weight Mn of 1,000 to 20,000 g/mol, which are obtainable by
I) preparation of a polyurethane prepolymer containing NCO groups by reaction of
a1) one or more hydroxy-functional compounds having a number-average molecular weight Mn of 360 to 8,000 g/mol with
a2) one or more polyisocyanates and
a3) at least one compound having at least one group which is reactive with isocyanate and at least one group which is ionic or capable of forming an ion,
II) subsequent reaction of the polyurethane prepolymer containing NCO groups with
a4) one or more hydroxy-functional monoamines and optionally with one or more polyols in ratios of amounts such that the resulting polyurethane has the desired hydroxyl number and urea and urethane group contents,
III) at least partial neutralization of the ionic groups or the groups which can be converted into ionic groups in the resulting polyurethane before or after the reaction in stage II and transfer of the reaction product obtained into the aqueous phase,
and
B) 2.0 to 25 wt.%, based on the solids content of polyurethane-urea resin employed, of one or more polyether polyols having a molecular weight of 400 to 5,000 g/mol.

2. Binder composition according to claim 1, **characterized in that** it comprises one or more water-dilutable hydroxy-functional polyurethane-urea resins having a urea group content (calculated as -NHCONH-) of 20 to 250 mmol in 100 g of solid resin, a urethane group content (calculated as -NHCOO-) of 80 to 250 mmol in 100 g of solid resin, an OH number of 40 to 200, an acid number of 15 to 80 and a number-average molecular weight Mn of 1,500 to 15,000 g/mol.

3. Binder composition according to claim 1 or 2, **characterized in that** component a1) comprises hydroxy-functional linear or branched compounds having an OH functionality of 2 to 3, an OH number of 50 to 250 and a number-average molecular weight Mn of 360 to 8,000 g/mol.

4. Binder composition according to claim 1, 2 or 3, **characterized in that** polyester polyols, polyether polyols, polycarbonate polyols, polylactone polyols and/or poly(meth)acrylate polyols are employed as component a1).

5. Pigment paste comprising a binder composition according to one of claims 1 to 4 as a paste resin and one or more pigments in a pigment/binder weight ratio of 0.3 : 1 to 20 : 1, and optionally water, organic solvents and/or conventional lacquer additives.

6. Use of the pigment paste according to claim 5 for the production of pigmented base lacquer or top lacquer layers in multilayer lacquering.

7. Use of the pigment paste according to claim 5 in the lacquering of vehicles and vehicle components.

8. Use of the binder composition according to one of claims 1 to 4 in the production of multilayer lacquerings, in particular in the lacquering of vehicles and vehicle components.

## Revendications

1. Composition de liant diluable dans l'eau, contenant
A) une ou plusieurs résines d'urée polyuréthanne hydroxyfonctionnelle(s) diluable(s) dans l'eau, avec une teneur en groupes urée (calculée en tant que -NHCONH-) de 10 à 300 mmoles pour 100 g de résine sèche, une teneur en groupes uréthannes (calculée en tant que -NHCOO-) de 20 à 300 mmoles pour 100 g de résine sèche, un nombre de OH de 20 à 250 et une masse molaire moyenne en nombre Mn de 1000 à 20.000 g/mole, qu'on peut obtenir par
I) préparation de prépolymères de polyuréthanne contenant des groupes NCO, par réaction
a1) d'un ou plusieurs composés hydroxyfonctionnels avec une masse molaire moyenne en nombre Mn de 360 à 8000 g/mole, avec
a2) un ou plusieurs polyisocyanates et
a3) au moins un composé avec au moins un groupe réactif avec l'isocyanate et au moins un groupe ionique ou capable de former des ions,
II) réaction subséquente des prépolymères de polyuréthanne contenant des groupes NCO avec
a4) une ou plusieurs monoamines hydroxyfonctionnelle(s), ainsi qu'éventuellement avec un ou plusieurs polyols, dans des rapports de quantités tels que le polyuréthanne résultant présente le nombre d'hydroxyles ainsi que les proportions de groupes urée et uréthannes désirés,
III) neutralisation au moins partielle des groupes ioniques ou des groupes convertibles en groupes ioniques du polyuréthanne obtenu avant ou après la réaction de l'étape II, et transfert du produit de réaction obtenu dans la phase aqueuse,
et
B) 2,0 à 25 % en poids, par rapport à la teneur en matière sèche dans la résine d'urée polyuréthanne utilisée, d'un ou plusieurs polyéthers de polyols avec une masse molaire de 400 à 5000 g/mole.

2. Composition de liant selon la revendication 1, **caractérisée en ce qu'**une ou plusieurs résines d'urée polyuréthanne hydroxyfonctionnelle(s) diluable(s) dans l'eau, avec une teneur en groupes urée (calculée en tant que -NHCONH-) de 20 à 250 mmoles par 100 g de résine sèche, une teneur en groupes uréthanne (calculée en tant que -NHCOO-) de 80 à 250 mmoles par 100 g de résine sèche, un nombre de OH de 40 à 200, un indice d'acide de 15 à 80 et une masse molaire moyenne en nombre Mn de 1500 à 15.000 g/mole, y sont contenus.

3. Composition de liant selon la revendication 1 ou 2, **caractérisée en ce que**, pour le composant a1), il s'agit de composés hydroxyfonctionnels linéaires ou ramifiés avec une fonctionnalité OH de 2 à 3, un nombre de OH de 50 à 250 et une masse molaire moyenne en nombre Mn de 360 à 8000 g/mole.

4. Composition de liant selon la revendication 1, 2 ou 3, **caractérisée en ce que**, comme composant a1), on utilise des polyesters de polyols, des polyéthers de polyols, des polycarbonates de polyols, des polylactones de polyols et/ou des poly(méth)acrylates de polyols.

5. Pâte pigmentée contenant une composition de liant suivant l'une des revendications 1 à 4 comme résine pâteuse et un ou plusieurs pigments dans un rapport de poids pigment/liant de 0,3/1 à 20/1, ainsi qu'éventuellement de l'eau, des solvants organiques et/ou des additifs de peinture ordinaires.

6. Utilisation de la pâte pigmentée suivant la revendication 5 pour la préparation de couches de peinture de base ou de peinture de couverture pigmentées dans la peinture à plusieurs couches.

7. Utilisation de la pâte pigmentée suivant la revendication 5 pour la peinture de véhicules et de pièces de véhicules.

8. Utilisation de la composition de liant suivant l'une des revendications 1 à 4 pour la préparation de peintures à plusieurs couches, notamment pour la peinture de véhicules et de pièces de véhicules.
